Europäisches Patentamt

European Patent Office

Office européen des brevets

(11) Publication number: **0 358 341**
**A1**

# EUROPEAN PATENT APPLICATION

(21) Application number: 89308124.0

(22) Date of filing: 10.08.89

(51) Int. Cl.⁵: **G09F 3/00** , **C09J 7/00**

(30) Priority: 11.08.88 GB 8819138

(43) Date of publication of application:
**14.03.90 Bulletin 90/11**

(84) Designated Contracting States:
**AT BE CH DE ES FR GB GR IT LI LU NL SE**

(71) Applicant: ENAGY LIMITED
10 St. Ann's Street,
London, SW1P 2DE(GB)

(72) Inventor: De Nagybaczon, Erno Nagy
75 East Sheen Avenue
London, S.W.14(GB)

(74) Representative: Fisher, Adrian John et al
CARPMAELS & RANSFORD 43 Bloomsbury
Square
London WC1A 2RA(GB)

(54) Adhesive coated substrates.

(57) A substrate, such as a postage stamp, is provided with a layer of adhesive thereon, the layer of adhesive being further coated with a protective layer which is soluble in a solvent in which the adhesive is substantially insoluble. Preferably, the adhesive is a pressure-sensitive adhesive, and the protective layer is formed from an edible water-soluble polymer such as gelatine.

EP 0 358 341 A1

## ADHESIVE COATED SUBSTRATES

This invention relates to adhesive-coated substrates, and more particularly to adhesive-coated sheets of flexible material such as paper.

Traditional adhesives are applied as liquids between surfaces of the objects to be bonded, and form strong cohesive and adhesive solids on loss of solvent (eg. by evaporation, or by diffusion into a porous substrate), on cooling, or by chemical reaction.

One commonly used form of adhesive is a remoistenable adhesive, such as is used to seal envelopes and affix postage stamps. Remoistenable adhesives are generally aqueous solutions of a natural polymer, such as gum arabic or dextrin (modified starch), or a synthetic polymer such as hydrolysed polyvinyl acetate (polyvinyl alcohol). On removal of the water solvent by evaporation, a dry film is left. On moistening (eg. by licking or on a roller), the polymeric material is redissolved, and the adhesive is ready to be used.

The technology of remoistenable adhesives has certain disadvantages; the adhesive film can be inadvertently removed altogether by the application of too much moisture, so that the adhesive properties are lost. Also, under hot and humid conditions the film of adhesive can moisten and soften. This problem is particularly acute in the case of postage stamps, because of the tendency of sheets of postage stamps to stick to each other in warm and humid conditions. This so-called "blocking" of postage stamps can of course result in the expensive loss of large quantities of stamps.

Another group of commonly used adhesives are the "dry-stick", "contact" or "impact" adhesives. These are generally based on natural or synthetic elastomers (eg. natural rubber, ethylene-vinyl acetate copolymers and styrenic thermoplastic elastomers), and are generally used in the form of aqueous dispersions or latexes, or as solutions in non-aqueous solvents such as aromatic hydrocarbons. Where the surfaces to be joined are impervious to the solvent, both surfaces may be coated with the adhesive, and most of the solvent allowed to evaporate before bringing the tack-free surfaces together. Adhesion (self adhesion or autohesion) between the films is thought to result from polymer chain diffusion across the interface. Full adhesion takes time to develop.

A further class of commonly-used adhesives comprises the "pressure-sensitive" adhesives, which are so called because the strength of the joint depends, inter alia, on the pressure used in making the bond. This type of adhesive is permanently sticky or tacky, and adhesion is achieved with an adherend which has its surface untreated with adhesives; this contrasts with contact adhesives which require autohesion between two similar surfaces to achieve a bond.

Pressure-sensitive adhesives display immediate adhesion or "grab" on contact. Exact placing is thus necessary, because adjustment of the position after contact is usually possible only to a very limited extent, or not at all.

Pressure-sensitive adhesives are commonly used in pretreated films, tapes, textiles and paper sheets, coated on one or both sides. The tacky surface or surfaces require protection until use by a release sheet liner (or "backing paper") which may be coated with a highly abhesive material such as silicone or polytetrafluoroethylene (PTFE). Immediately before use, the surface of the pressure-sensitive adhesive is separated from the release sheet. The release sheet in effect guards the tack of the pressure-sensitive adhesive, by covering it with a sheet to which it adheres only very weakly.

Pressure-sensitive adhesives offer a way of providing a substrate with a coating of adhesive which will adhere tenaciously to another surface, when intended, but which may be nonetheless be handled easily before use. Unfortunately, however, the conventional pressure-sensitive adhesive technology is not appropriate for postage stamps and for a number of similar applications. One reason for this is that the usual silicone-coated release paper is comparatively expensive, and in many cases is more expensive than the material which is attached to it. A further problem is that it is a requirement of many postal authorities that a stamp can be removed or repositioned within a few seconds of being applied, and this requirement could not be met with conventional pressure-sensitive adhesives.

One possible approach to providing postage stamps with an adhesive which does not give rise to the blocking problem, would be to reduce the adhesiveness of the gum which is used, but this increases the likelihood of the stamps becoming detached during the handling of mail by automatic sorting equipment. Even with the gums which are presently used, loss of postage stamps from mail is a significant problem. It has been estimated that some 60,000 stamps become detached from mail in the United States Postal Service every day.

The present invention provides a way of providing a substrate with a coating of a tenacious adhesive, without the expense of a silicone release sheet to render it handleable.

According to a first aspect of the present invention, there is provided a substrate having a layer of adhesive thereon, the layer of adhesive being further coated with a protective layer which is soluble in a solvent in which the adhesive is substantially insoluble.

The adhesive may be any of the very wide range of adhesives which are described in the literature, such as in "Adhesives Handbook", 4th Edition, J. Speeds, publ. Butterworths (1984), ISBN 0-408-01356-7, the disclosures of which are hereby incorporated by reference. Pressure-sensitive adhesives are more specifically detailed in "Handbook of Pressure Sensitive Adhesive Technology", Donatas Satas, publ. Van Nostrand Reinhold (1982), ISBN 0-442-25724-4, the disclosures of which are also incorporated herein by reference.

Preferably, the protective layer is water-soluble, while the adhesive is substantially insoluble in water. It is particularly preferred that the adhesive be a pressure-sensitive adhesive, and that the protective layer be edible and water-soluble, and also non-hygroscopic and/or non-adhesive. Such a combination of a pressure-sensitive adhesive and an edible, non-adhesive protective coating is especially advantageous for postage stamps. The protective layer serves to prevent blocking of sheets of stamps in conditions of high humidity, but it is easily removed merely by licking the coated surface in the manner which is conventional with normally gummed stamps.

Moreover, a stamp which is coated in this manner can be removed from the surface to which it is applied, or its position can be readjusted, so long as the adhesive surface remains moist. As soon as the surface dries, or the moisture is absorbed by the surface to which the stamp is applied, the stamp adheres tenaciously to the surface by virtue of the pressure-sensitive adhesive.

There are commercially available pressure-sensitive adhesives which give a stronger bond to paper than do conventional postage stamp gums. As is well known in the art, the adhesiveness and strength of bond of a pressure-sensitive adhesive is governed by the choice of base polymer and by the choice of tackifiers, plasticisers and additives such as preservatives and colorants, and by the proportions in which such components are used.

Typical base polymers for pressure-sensitive adhesives are elastomeric in character, or glassy polymers made elastomeric by formulation with tackifiers and/or plasticisers. Examples of appropriate polymers are natural rubber or reclaim rubber, butyl rubber, styrene butadiene rubber, polybutene, polybutylene, polyisobutylene, polybutadiene, polychloroprene, block copolymers of styrene-butadiene-styrene (SBS), polyvinyl ethers, such as polyvinyl isobutyl ether, polyvinyl acetate, ethylene-vinyl acetate (EVA) copolymers, polyurethane, silicone and polysulphide rubbers.

Tackifiers are in general derivatives of gum or talloil resin, obtained by esterification, hydrogenation, polymerisation or co-polymerisation. Proprietary tackifiers include synthetic polycyclic hydrocarbon and terpenoid types, and short-chain hydrocarbon polymers.

A preferred pressure-sensitive adhesive is polyvinyl isobutyl ether. A suitable grade is commercially available under the Trade Name Lutonal I60 (BASF).

It will be appreciated that pressure-sensitive adhesives used in the present invention are not required to be releasable from abhesive release sheets, and it is therefore possible to use compositions with greater adhesiveness than conventional pressure-sensitive adhesives.

When the present invention is applied to the provision of adhesive coatings for stamps, the fact that it is the protective layer which is ingested by the user of the stamp (rather than the adhesive itself) avoids the potential hazard of the adhesive being to some degree toxic. The pressure-sensitive adhesive which is used with such an edible protective layer will be insoluble in water and highly adherent to the stamp, so that none is ingested by the user.

For many applications, it is preferred to use a polymer for the protective layer which is tasteless. This of course has the advantage of avoiding the extremely unpleasant taste of the gums which are currently used for stamps.

Suitable materials for use as the protective layer include natural proteins and carbohydrates, and synthetic derivatives thereof. Examples include gums such as gum arabic, gelatin, starch, hydrolysed and dextrinised starch, starch chemically modified to inhibit retrogradation in solution, partially hydrolysed polyvinyl acetate (polyvinyl alcohol), water-soluble cellulose derivatives, ethers such as methyl cellulose, carboxymethyl cellulose, ethylhydroxyethyl cellulose, hydroxyethyl cellulose, hydroxypropyl cellulose, carboxymethyl hydroxyethyl cellulose and hydroxypropyl methyl cellulose, polyacrylic acid and its salts and polyacrylate esters, polyethoxy ether-alcohols and polyvinylpyrrolidone, and copolymers thereof.

Gelatin is particularly preferred for use as the protective layer. If other polymers are employed, it is preferred to use higher molecular weight forms than are conventionally used in the formulation of adhesives, since such higher molecular weight forms tend to be more resistant to blocking under humid conditions.

The protective layer may comprise a base polymer, such as any of the polymers recited above, in admixture with preservatives, colorants, plasticisers, polyol water-retaining agents and viscosity-reducing agents such as dicyandiamide. Plasticisers may include polyethylene glycol ethers, or polyalcohols or derivatives of glycerol or of carbohydrates. Wetting agents may be useful to avoid cissing on the surface of the adhesive layer. If desired, the protective layer may also include abhesive particles (formed from waxes or other polymers having a low critical surface tension) to minimise blocking.

In some applications, it may be desirable to render the protective coating as hydrophilic as possible, without surface active (wetting) properties, so that on remoistening it diffuses into the adherend, with little tendency to remain as a thin film on the layer of adhesive. A compromise may be required, however, where the intended adherend is a heavily sized (ie. partly hydrophobic) paper.

The adhesive may be applied to the substrate by any of the methods conventionally used in the art, eg. as a solution or as a hot melt. Preferably, the adhesive will be applied as a solution in an organic solvent. In the case of polyvinyl isobutyl ether, a suitable solvent is toluene, but it will be appreciated that other solvents could also be used. The solution may be coated on to the substrate by any conventional technique, such as by the use of a metering bar.

Preferably, the adhesive is applied in an amount of from 0.1 to 10 grams per square meter (gsm) dry weight, and more preferably in an amount of from 0.5 to 8 gsm. Typically, the adhesive will be applied in an amount of from 1 to 5 gsm, eg. from 2 to 3 gsm.

The protective layer will also generally be applied as a solution by spray, roller, blade, air-knife, or by flow coating. In the case of a water-soluble protective layer, it will usually be convenient to apply it as an aqueous solution.

The protective layer may also be applied in the amounts described above in relation to the coating of adhesive. However, in the case of a water-soluble protective layer which is intended to be removable merely by being licked by the user, rather lower quantities will generally be appropriate. In such a case, it is preferred that the protective layer be applied in an amount of from 0.05 to 5 gsm dry weight, and more preferably in an amount of from 0.1 to 2.5 gsm. An amount of from 0.2 to 1.0 gsm, eg. 0.5 gsm has been found to be particularly suitable in the case of a gelatine protective layer for postage stamp paper.

To permit removal of postage stamps from envelopes by soaking in water, the stamp paper may be coated with a water-soluble material prior to being coated with the adhesive layer. Suitable water-soluble materials include those mentioned above as being appropriate for use in the protective layer.

As already indicated above, a preferred substrate for use in the present invention is paper.

However, it will be appreciated that a very wide range of alternative substrates may be used. The substrate may be rigid or flexible, and it may be permeable or impermeable. For example, the substrate may be a tape or sheet based on cellulose or on a synthetic polymer such as a polyester (eg. polyethylene terephthalate) or a polyamide (eg.nylon). Alternatively, the substrate may be a fabric, such as is used in surgical dressings, or it may be a floor covering sheet (such as a plastics or carpet tile), or a surfacing veneer or laminate.

According to a second aspect of the present invention, there is provided a substrate having a layer of adhesive thereon, the layer of adhesive being further coated with a protective layer which is removable by abrasion. For example, the protective layer may be an extremely thin coating of a polymer, such that mild abrasion causes disruption of the protective layer, thereby exposing the adhesive layer underneath.

In a particularly preferred embodiment of this aspect of the invention, the protective layer is a layer of a fluorocarbon polymer or telomer, such as polytetrafluoroethylene (PTFE). As is well known, PTFE is highly abhesive (meaning that very few materials will adhere to it). We have found that a very thin layer of PTFE, while effective in protecting an underlying layer of adhesive during normal handling, may be removed, or at least disrupted, by licking, and this aspect of the invention therefore also lends itself to the production of improved postage stamps. In this case, the adhesive may conveniently be based on a water-soluble gum such as dextrin, which is currently used as an adhesive for postage stamps.

The thin protective layer can be applied by a variety of coating techniques, but the coating process described in European Patent Applications Nos. 85300491 and 85300492 is especially preferred for the application of a very thin film of PTFE.

The invention is now further described by reference to the following example:-

## EXAMPLE

A conventional coated sized paper of the kind currently used for the production of postage stamps was coated on one surface with a 50% solution of Lutonal I60 in toluene by means of a metering bar, to yield an eventual dry coating weight of 2.5 gsm. After drying, the adhesive-coated paper was further coated with a 10% solution of gelatine in water, to yield an eventual dry coating weight of 0.5 gsm.

Prior to coating with the gelatine, the adhesive-coated paper was very tacky to the touch. After the gelatine coating, however, the surface was virtually tack-free. It was found that the gelatine coating could easily be removed merely by licking the coated surface in the manner which is conventional for moistening the gum of a postage stamp.

The moistened surface was then applied to a sheet of paper. For a few seconds thereafter, the two sheets of paper could readily be separated. However, after a few seconds' contact between them, the two sheets were firmly adhered to each other.

It will be understood that the present invention has been described above purely by way of example, and that many variations are possible within the scope of the invention.

## Claims

1. A substrate having a layer of adhesive thereon, the layer of adhesive being further coated with a protective layer which is soluble in a solvent in which the adhesive is substantially insoluble.

2. An adhesive-coated substrate according to claim 1 wherein the substrate is paper.

3. An adhesive-coated substrate according to claim 1 or claim 2 wherein the adhesive is a pressure-sensitive adhesive.

4. An adhesive-coated substrate according to claim 3 wherein the pressure-sensitive adhesive is polyvinyl isobutyl ether.

5. An adhesive-coated substrate according to any preceding claim wherein the protective layer is a layer of an edible, water-soluble material.

6. An adhesive-coated substrate according to claim 5 wherein the edible material is a protein or a carbohydrate polymer.

7. An adhesive-coated substrate according to claim 6 wherein the edible material is gelatine.

8. A substrate having a layer of adhesive thereon, the layer of adhesive being further coated with a protective layer which is removable by abrasion.

9. An adhesive-coated substrate according to claim 8 wherein the adhesive is a water-soluble gum.

10. An adhesive-coated substrate according to claim 9 wherein the protective layer is a layer of a fluorocarbon polymer or telomer.

European Patent
Office

EUROPEAN SEARCH REPORT

Application Number

EP 89 30 8124

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 197 729 (A. LAVANDER) * Page 2, line 39 - page 3, line 40; page 4, line 32 - page 5, line 24; figures 1,3 * | 1-3,5-7 | G 09 F 3/00 C 09 J 7/00 |
| X | FR-A-2 325 519 (R. SHIBATA et al.) * Page 4, line 22 - page 5, line 13; page 6, lines 14-29; figures 1-4 * | 8 | |
| A | EP-A-0 049 483 (J. DUDZIK et al.) * Page 2, line 6 - page 5, line 15; figures * | 1-10 | |
| A | FR-A-1 517 680 (R. NIEDER) | | |

TECHNICAL FIELDS SEARCHED (Int. Cl.5)

G 09 F
C 09 J

The present search report has been drawn up for all claims

| Place of search | Date of completion of the search | Examiner |
|---|---|---|
| THE HAGUE | 23-11-1989 | GALLO G.G. |